(19) Europäisches Patentamt / European Patent Office / Office européen des brevets

(11) **EP 3 680 604 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **20151332.2**

(22) Anmeldetag: **12.01.2020**

(51) Internationale Patentklassifikation (IPC):
**G01B 11/04** *(2006.01)* **B23D 59/00** *(2006.01)*
**G01B 11/26** *(2006.01)*

(52) Gemeinsame Patentklassifikation (CPC):
**G01B 11/04; B23D 59/001; G01B 11/26**

(54) **ANLAGE UND VERFAHREN ZUM BETREIBEN EINER ANLAGE ZUR HERSTELLUNG VON WERKSTOFFPLATTEN**

INSTALLATION AND METHOD FOR OPERATING AN INSTALLATION FOR PRODUCING MATERIAL SHEETS

INSTALLATION ET PROCÉDÉ DE FONCTIONNEMENT D'UNE INSTALLATION DE FABRICATION DE PANNEAUX DE MATÉRIAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2019 DE 102019100661**

(43) Veröffentlichungstag der Anmeldung:
**15.07.2020 Patentblatt 2020/29**

(73) Patentinhaber: **DIEFFENBACHER GMBH MASCHINEN- UND ANLAGENBAU**
**75031 Eppingen (DE)**

(72) Erfinder:
• **KLEIN, Harald**
**75031 Eppingen (DE)**
• **KOENEKAMP, Ulf**
**75031 Eppingen (DE)**
• **WILMSEN, Ulrich**
**75031 Eppingen (DE)**

(74) Vertreter: **Hartdegen, Helmut**
**Angerfeldstraße 12a**
**82205 Gilching (DE)**

(56) Entgegenhaltungen:
DE-A1- 3 143 270     DE-A1- 19 511 990
JP-A- 2010 002 319

**Beschreibung**

Die Erfindung betrifft eine Anlage zum Ablängen eines endlosen Plattenstrangs zur Herstellung von Werkstoffplatten und bezieht sich auf ein Verfahren zum Betreiben einer solchen Anlage, mit wenigstens einer Fördereinrichtung zum Beförderung des Plattenstrangs und der Werkstoffplatten durch die Anlage, mit wenigstens einer Schneidvorrichtung zum Schneiden des endlosen Plattenstrangs zu Werkstoffplatten und mit wenigstens einer Vermessungsvorrichtung zur Vermessung der Werkstoffplatten, wobei die wenigstens eine Vermessungsvorrichtung der wenigstens einen Schneidevorrichtung bezüglich des Förderwegs durch die Anlage nachgeschaltet ist.

Aus der DE 10 2016 001 995 A1 ist eine Vorrichtung und ein Verfahren zum Beschneiden und Vermessen einer Platte mit wenigstens einer verstellbaren Schneideinrichtung zum Beschneiden eines flachen und gepressten Werkstoffs in einer Schneidstation, einer Transporteinrichtung zum Transport der geschnittenen Platte zu einer Vermessungsstation und einer rechnergestützten Auswerte- und Steuerungseinheit bekannt. Die Vermessungsstation umfasst ein Kamera-Plattenmesssystem mit Messkameras. Um die Genauigkeit zu verbessern, ist vorgesehen, dass aufgrund der durch die Messkameras gewonnen und an die Auswerte- und Steuerungseinheit weitergeleiteten Messergebnisse eine Stelleinrichtung zur Ausrichtung der Schneideeinrichtung ansteuerbar ist. Die gemessenen Daten für die Abmessungen der letzten Platte werden also genutzt, um für eine der folgenden Platten die Ausrichtung der Säge so einzustellen, dass sich das Ergebnis hinsichtlich beispielsweise der Eckwinkel, der gleichen Diagonalen- oder Kantenlänge verbessert.

Der Erfindung liegt die Aufgabe zugrunde eine Anlage und ein Verfahren der eingangs genannten Art zu gestalten, bei denen Abmessungen und/oder eine Winkligkeit und/oder eine Ausrichtung von Werkstoffplatten während der Förderung durch die Vermessungsvorrichtung genauer ermittelt und/oder eingestellt werden können.

Weiterhin liegt der Erfindung die Aufgabe zu Grunde eine Anlage und ein Verfahren der eingangs genannten Art anzugeben, welche eine kostengünstige und schnelle Ermittlung von Abmessungen und/oder Winkligkeit und/oder Ausrichtung von Werkstoffplatten während der Förderung durch die Vermessungsvorrichtung ermöglicht.

Diese und weitere Aufgaben werden erfindungsgemäß durch eine Anlage gemäß Anspruch 1 und einem Verfahren zum Betreiben einer Anlage nach Anspruch 8 gelöst.

Erfindungsgemäß sind zueinander beabstandete Erfassungsbereiche vorgesehen, welche mit entsprechenden Erfassungseinheiten überwacht werden. Mit den Erfassungseinheiten wird die Anwesenheit einer Werkstoffplatte in den entsprechenden Erfassungsbereichen erfasst. Ferner wird mit den Erfassungsbereichen der Zeitpunkt des Eintritts in einen jeweiligen Erfassungsbereich und/oder der Zeitpunkt des Austritts einer Werkstoffplatte aus dem Erfassungsbereich ermittelt.

Eine Abmessung der Werkstoffplatte kann beispielsweise die Länge, insbesondere die Kantenlänge, der Werkstoffplatte sein. Die Ausrichtung der Werkstoffplatte gibt die Lage der Werkstoffplatte auf der Förderbahn der Fördereinrichtung in Förderrichtung gesehen an. Unter der Winkligkeit der Werkstoffplatte wird insbesondere die Rechtwinkligkeit bzw. Rechteckigkeit der Werkstoffplatte und Abweichungen hiervon verstanden.

Aus einem zeitlichen Abstand zwischen zwei Erfassungssignalen, insbesondere zwischen zwei Eintrittssignalen, zwischen zwei Austrittssignalen oder zwischen einem Eintrittssignal und einem Austrittssignal, und einer weiteren Größe, insbesondere des räumlichen Abstands der beteiligten Erfassungsbereiche und/oder der Fördergeschwindigkeit, wird wenigstens eine Abmessung der erfassten Werkstoffplatte und/oder eine Ausrichtung der Werkstoffplatte relativ zur Förderrichtung und/oder eine Abweichung der Werkstoffplatte von einer Rechtwinkligkeit bestimmt, insbesondere berechnet. So kann die Länge der Werkstoffplatte in Förderrichtung als Abmessung ermittelt werden.

Die räumlichen Abstände zwischen den Erfassungsbereichen können vorteilhafterweise vorgegeben werden. Die räumlichen Abstände können während des Betriebs der Vermessungsvorrichtung überwacht und gegebenenfalls korrigiert werden. So können etwaige temperaturbedingte Veränderungen kompensiert werden.

Die Fördergeschwindigkeit kann vorgegeben werden. Sie kann mittels entsprechender Messvorrichtungen überprüft und entsprechend korrigiert werden. Alternativ oder zusätzlich kann die Fördergeschwindigkeit mit entsprechenden Vorrichtungen, insbesondere der Vermessungsvorrichtung selbst bestimmt, insbesondere gemessen, werden.

Die Erfindung ermöglicht, dass wenigstens eine Abmessung und/oder die Ausrichtung und/oder die Winkligkeit der geschnittenen Werkstoffplatte während der insbesondere kontinuierlichen Förderung durch die Anlage zur Herstellung der Werkstoffplatten, insbesondere durch die Vermessungsvorrichtung, überwacht wird. Die ermittelten Messgrößen können mit entsprechenden Sollwerten verglichen werden. Im Falle einer Abweichung kann die Anlage zur Herstellung der Werkstoffplatten, insbesondere eine der Vermessungsvorrichtung funktional vorgeschaltete Schneidvorrichtung, entsprechend geregelt werden. So kann durch die Vermessung einer Werkstoffplatte und die entsprechende Regelung der Schneidvorrichtung die Genauigkeit der Abmessung der nachfolgenden Werkstoffplatten verbessert werden.

Die Erfassungsbereiche können eine räumliche Ausdehnung haben. Vorteilhafterweise kann ein Erfassungsbereich einen Eintrittsbereich und einen Austrittsbereich aufweisen. Der Eintrittsbereich befindet sich auf der Seite des Erfassungsbereichs, welcher der herannahenden Werkstoffplatte zugewandt ist. Der Austrittsbereich befindet sich auf der dem Eintrittsbereich abgewandten Seite. Beim Eintritt der Werkstoffplatte in den Eintrittsbereich kann ein Eintrittssignal erzeugt werden. Beim Austritt der Werkstoffplatte aus dem Austrittsbereich kann ein Austrittssignal erzeugt werden.

Vorteilhafterweise kann die räumliche Ausdehnung eines Erfassungsbereichs in Förderrichtung im Vergleich zur Größenordnung der Abmessungen der Werkstoffplatten so gering sein, dass der Eintrittsbereich nahezu mit dem Austrittsbereich zusammenfällt. In diesem Fall sind ein räumlicher Abstand zwischen einer Stelle im Raum und dem Eintrittsbereich und ein räumlicher Abstand zwischen derselben Stelle im Raum und dem Austrittsbereich eines Erfassungsbereichs identisch. Räumliche Abstände zu dem Eintrittsbereich und räumliche Abstände zu dem Austrittsbereich können dann als räumliche Abstände auf den Erfassungsbereich, zu der betreffend Eintrittsbereichen der betreffende Austrittsbereich gehört, bezogen werden.

Mit der Vermessungsvorrichtung können beim Eintritt und/oder beim Austritt der Werkstoffplatte entsprechende Zeitstempel erzeugt werden. Die Zeitstempel geben den genauen Eintrittszeitpunkt der Werkstoffplatte in einen Eintrittsbereich und/oder den genauen Austrittszeitpunkt der Werkstoffplatte aus einem Austrittsbereich an.

Vorteilhafterweise kann die wenigstens eine Werkstoffplatte aus einem endlosen Plattenstrang abgelängt, insbesondere geschnitten, werden. Die wenigstens eine Werkstoffplatte kann aus dem endlosen Plattenstrang mittels einer Schneidvorrichtung geschnitten werden. Die Schneidvorrichtung kann funktional der Vermessungsvorrichtung vorgelagert sein. Die Schneidvorrichtung kann vorteilhafterweise eine Diagonalsäge, insbesondere eine Mehrfach-Diagonalsäge aufweisen. Mit der Mehrfach-Diagonalsäge kann die wenigstens eine Werkstoffplatte mit der gewünschten Plattenlänge aus dem endlosen Plattenstrang geschnitten werden können.

Vorteilhafterweise kann die Schneidvorrichtung auf Basis der Ergebnisse der Vermessung mit der Vermessungsvorrichtung gesteuert und/oder geregelt werden.

Die Werkstoffplatten können aus Holz und/oder anderen nachwachsenden Agrarprodukten wie Span-, Faser-, Stroh-, und Schnitzelplatten, sowie Kunststoffplatten, sein.

Vorteilhafterweise können die Werkstoffplatten als Pressplatten realisiert sein. Der endlose Plattenstrang kann vorteilhafterweise mittels einer insbesondere kontinuierlich arbeitenden Presse aus Streugut gepresst werden.

Als Streugut können Partikel, insbesondere Späne, Schnitzel oder Fasern oder dergleichen, aus Holz und/oder anderen nachwachsenden Agrarprodukten und/oder Kunststoff denen. Das Streugut kann mit Bindemitteln oder Klebemittel versehen sein.

Bei der erfindungsgemäßen Ausführungsform sind wenigstens zwei Erfassungsbereiche bezüglich der Förderrichtung nebeneinander angeordnet und wenigstens zwei Erfassungsbereiche bezüglich der Förderrichtung hintereinander angeordnet.

Mit bezüglich der Förderrichtung nebeneinander angeordneten Erfassungsbereichen kann eine Ausrichtung eines bezüglich der Förderrichtung vorderen Randes und/oder eines hinteren Randes der Werkstoffplatte gegenüber der Förderrichtung insbesondere auf trigonometrischem Wege ermittelt werden.

Vorteilhafterweise können die Erfassungsbereiche jeweils im Bereich eines seitlichen Randes der Fördereinrichtung angeordnet sein. Auf diese Weise kann ein größtmöglicher räumlicher Abstand erreicht werden. So kann insgesamt die Messgenauigkeit verbessert werden.

Vorteilhafterweise können nebeneinanderliegende Erfassungsbereiche, insbesondere die Eintrittsbereiche der nebeneinander liegenden Erfassungsbereiche und/oder die Austrittsbereiche der nebeneinander liegenden Erfassungsbereiche, bezüglich der Förderrichtung auf gleicher Höhe angeordnet sein. Auf diese Weise kann die Ausrichtung der Werkstoffplatte relativ zur Förderrichtung einfacher bestimmt werden. Vorteilhafterweise können die Erfassungsbereiche, insbesondere die Eintrittsbereiche und/oder die Austrittsbereiche der Erfassungsbereiche, entlang einer Geraden angeordnet sein, welche senkrecht zur Förderrichtung verläuft.

Erfindungsgemäß sind zwei Erfassungsbereiche bezüglich der Förderrichtung hintereinander angeordnet. Auf diese Weise kann aus dem zwischen den Erfassungssignalen zurückgelegten Weg der Werkstoffplatte bei Kenntnis der Fördergeschwindigkeit eine Länge der Werkstoffplatte in Förderrichtung bestimmt werden.

Vorteilhafterweise können die Erfassungsbereiche, insbesondere die Eintrittsbereiche und/oder die Austrittsbereiche der Erfassungsbereiche, entlang einer Geraden angeordnet sein, welche parallel zur Förderrichtung verläuft. Auf diese Weise können unterschiedliche Ausrichtungen der Werkstoffplatte relativ zur Förderrichtung besser kompensiert werden, um die Länge der Werkstoffplatte zu ermitteln.

Bei einer weiteren vorteilhaften Ausführungsform können wenigstens zwei Erfassungseinheiten als Gruppe angeordnet sein. Auf diese Weise kann die Ansteuerung der Erfassungseinheiten und/oder die Auswertung von Erfassungssignalen der Erfassungseinheiten einfacher durchgeführt werden. Ferner kann durch die Anordnung von mehreren Erfassungseinheiten in einer Gruppe eine Redundanz erzeugt werden. So kann wenigstens eine Abmessung der Werkstoffplatte, insbesondere die Länge, beim Durchlauf durch die Vermessungsvorrichtung mehrfach bestimmt werden. Die Ergebnisse der von mehreren Bestimmungen der Abmessung können gemittelt werden. Eine Messgenauigkeit kann so erhöht werden.

Bei einer weiteren vorteilhaften Ausführungsform kann wenigstens eine Erfassungseinheit berührungslos arbeiten. Auf diese Weise kann ein Wartungsaufwand und/oder ein Verschleiß der Erfassungseinheit verringert werden.

Vorteilhafterweise kann wenigstens eine Erfassungseinheit wenigstens eine Lichtschranke aufweisen. Mit einer Lichtschranke kann die wenigstens eine Werkstoffplatte berührungslos erfasst und vermessen werden.

Vorteilhafterweise kann die Lichtschranke wenigstens einen Laser als Lichtquelle aufweisen. Mit einem Laser kann ein Erfassungsbereich präzise und reproduzierbar realisiert werden. Ferner kann mit einem Laserstrahl mit entsprechend klein gewählten Querschnitt eine räumliche Ausdehnung des Erfassungsbereichs in Förderrichtung im Vergleich zur Größenordnung der wenigstens einen Abmessung der wenigstens einen Werkstoffplatte so gering realisiert werden, dass der Eintrittsbereich des Erfassungsbereichs nahezu mit dem Austrittsbereich zusammenfällt. So können die Eintrittszeitpunkte und/oder die Austrittszeitpunkte genauer bestimmt werden.

Insbesondere kann der Empfänger mit einer Blende, insbesondere einer Schlitzblende versehen werden, so dass der Erfassungsbereich auf einen sehr schmalen Bereich kleiner 1,5 mm, insbesondere kleiner 1 mm, besonders bevorzugt kleiner 0,5 mm eingegrenzt wird, insbesondere unabhängig von der Ausdehnung des aus dem Sender austretenden Strahls.

Bei einer weiteren vorteilhaften Ausführungsform kann wenigstens ein Teil wenigstens einer Erfassungseinheit räumlich oberhalb des Förderwegs und/oder wenigstens ein Teil wenigstens einer Erfassungseinheit räumlich unterhalb des Förderwegs und/oder wenigstens ein Teil wenigstens einer Erfassungseinheit räumlich neben dem Förderweg angeordnet sein.

Vorteilhafterweise kann wenigstens ein Sender wenigstens einer Erfassungseinheit, insbesondere einer Lichtschranke, räumlich unterhalb des Förderwegs der Werkstoffplatte und wenigstens ein entsprechender Empfänger oberhalb des Förderwegs angeordnet sein oder umgekehrt. So kann mit der Erfassungseinheit, insbesondere der Lichtschranke, ein räumlich vertikal verlaufende Erfassungsbereich definiert werden.

Alternativ oder zusätzlich können wenigstens ein Sender und wenigstens ein Empfänger wenigstens einer Erfassungseinheit, insbesondere einer Lichtschranke, auf gegenüberliegenden Seiten insbesondere auf gleicher räumlicher Höhe neben dem Förderweg angeordnet sein. Auf diese Weise kann mit der Erfassungseinheit ein horizontal verlaufender Erfassungsbereich realisiert werden. Der horizontal verlaufende Erfassungsbereich kann sich quer zur Förderrichtung über die gesamte Breite des Förderwegs erstrecken.

Bei einer weiteren vorteilhaften Ausführungsform kann die Vermessungsvorrichtung wenigstens ein Mittel aufweisen zur Bestimmung einer Fördergeschwindigkeit der Werkstoffplatte in Förderrichtung. Auf diese Weise kann die Fördergeschwindigkeit ermittelt und überprüft und falls erforderlich korrigiert werden.

Vorteilhafterweise kann wenigstens eine Geschwindigkeitsmessvorrichtung, insbesondere wenigstens ein Messrad oder dergleichen, vorgesehen sein, um die Fördergeschwindigkeit zu bestimmen. Wenigstens ein Messrad kann vorteilhafterweise auf der Werkstoffplatte ablaufen. Alternativ oder zusätzlich kann wenigstens ein Messrad auf dem endlosen Plattenstrang, aus dem die Werkstoffplatten geschnitten werden, ablaufen. In diesem Fall kann das wenigstens eine Mittel zur Bestimmung der Fördergeschwindigkeit in Förderrichtung vor der Vermessungsvorrichtung, insbesondere in einer Schneidvorrichtung, angeordnet sein. Die Messung der Fördergeschwindigkeit des endlosen Plattenstranges kann jedoch nur dann verwendet werden, sofern die geschnittene Werkstoffplatte nach dem Schneidvorgang keine Beschleunigung erfährt.

Alternativ oder zusätzlich kann die Fördergeschwindigkeit mithilfe von zeitlichen Abständen von Erfassungssignalen und den räumlichen Abständen von beteiligten Erfassungsbereichen ermittelt werden. Auf diese Weise kann auf eine separate Geschwindigkeitsmessvorrichtung verzichtet werden.

Vorteilhafterweise kann die Fördergeschwindigkeit als Quotient aus einem räumlichen Abstand zwischen zwei auf dem Förderweg hintereinander gelegenen Erfassungsbereichen, insbesondere zwischen deren Eintrittsbereichen, und einem zeitlichen Abstand zwischen den Eintrittssignalen, die beim Eintritt der zu vermessenden Werkstoffplatte in die jeweiligen Erfassungsbereiche erzeugt werden, berechnet werden.

Zusätzlich oder alternativ kann die Fördergeschwindigkeit als Quotient aus einem räumlichen Abstand zwischen zwei auf dem Förderweg hintereinander gelegenen Erfassungsbereichen, insbesondere zwischen deren Austrittsbereichen, und einem zeitlichen Abstand zwischen den Austrittssignalen, die beim Austritt der zu vermessenden Werkstoffplatte aus den jeweiligen Erfassungsbereiche erzeugt werden, berechnet werden.

Eine weitere vorteilhafte Ausgestaltungsform zeichnet sich dadurch aus, dass die weiteren vorgegebenen, vorgebbaren und/oder bestimmbaren Größe die Fördergeschwindigkeit und/oder der räumliche Abstand zwischen zwei Erfassungsbereichen ist.

Ferner wird die Aufgabe erfindungsgemäß durch ein Verfahren zum Betreiben einer Anlage zur Herstellung von Werkstoffplatten gemäß Anspruch 8 gelöst.

Erfindungsgemäß wird aus einem zeitlichen Abstand zwischen zwei Erfassungssignalen, insbesondere Eintrittssignalen und/oder Austrittssignalen, und wenigstens einer weiteren Größe, insbesondere einem räumlichen Abstand der beteiligten Erfassungsbereiche und/oder der Fördergeschwindigkeit der Werkstoffplatte durch die Vermessungsvorrichtung, wenigstens eine Abmessung und/oder eine Ausrichtung und/oder eine Winkligkeit der Werkstoffplatte bestimmt, insbesondere berechnet.

Bei der erfindungsgemäßen Ausgestaltung des Verfahrens wird wenigstens eine Werkstoffplatte in wenigstens zwei in Förderrichtung hintereinander angeordneten Erfassungsbereichen erfasst, wobei ein zeitlicher Abstand zwischen einem Austrittssignal beim Austritt der Werkstoffplatte aus einem in Förderrichtung vorderen Erfassungsbereich und einem Eintrittssignal beim Eintritt der Werkstoffplatte in einen in Förderrichtung hinter dem vorderen Erfassungsbereich gelegenen hinteren Erfassungsbereich ermittelt wird, und aus dem zeitlichen Abstand, der Fördergeschwindigkeit der Werkstoffplatte und dem räumlichen Abstand zwischen einem Austrittsbereich des vorderen Erfassungsbereichs und einem Eintrittsbereich des hinteren Erfassungsbereichs die Länge der Werkstoffplatte in Förderrichtung ermittelt wird. Auf diese Weise kann die Länge der Werkstoffplatte einfach mithilfe von zwei Erfassungseinheiten und entsprechenden Erfassungsbereichen ermittelt werden.

Bei der erfindungsgemäßen Ausgestaltung des Verfahrens wird wenigstens eine Werkstoffplatte in wenigstens zwei in Förderrichtung nebeneinander angeordneten Erfassungsbereichen erfasst, ein zeitlicher Abstand zwischen den jeweiligen Eintrittssignalen ermittelt, und aus dem zeitlichen Abstand zwischen den Eintrittssignalen, einem räumlichen Abstand der jeweiligen Eintrittsbereiche der Erfassungsbereiche und der Fördergeschwindigkeit eine Ausrichtung, insbesondere ein Neigungswinkel, des in Förderrichtung vorderen Randes der Werkstoffplatte relativ zur Förderrichtung ermittelt und/oder ein zeitlicher Abstand zwischen den jeweiligen Austrittssignalen ermittelt, und aus dem zeitlichen Abstand zwischen den Austrittssignalen, einem räumlichen Abstand der jeweiligen Austrittsbereiche der Erfassungsbereiche und der Fördergeschwindigkeit eine Ausrichtung, insbesondere ein Neigungswinkel, des in Förderrichtung hinteren Randes der Werkstoffplatte relativ zur Förderrichtung ermittelt. Auf diese Weise kann überprüft werden, ob die Werkstoffplatte mit gerader Ausrichtung auf dem Förderweg geführt wird und/oder es kann die Rechtwinkligkeit der Werkstoffplatte überprüft werden.

Dadurch dass die entsprechenden Erfassungsbereiche in Förderrichtung betrachtet nebeneinander angeordnet sind, kann mithilfe eines entsprechenden zeitlichen Abstands, unter dem der entsprechende Rand der Werkstoffplatte die jeweiligen Erfassungsbereiche erreicht, insbesondere auf trigonometrischem Wege eine entsprechende Ausrichtung des Randes zur Förderrichtung ermittelt werden. Die Ausrichtung des Randes kann insbesondere in Form eines Neigungswinkels angegeben werden. Insbesondere kann die Winkligkeit des vorderen oder hinteren Randes der Werkstoffplatte zur Förderrichtung überprüft werden und es kann festgestellt werden, ob die Ecken der Werkstoffplatte rechtwinklig ausgebildet sind. Vorteilhafterweise können die Erfassungsbereiche, insbesondere jeweiligen Eintrittsbereiche und/oder die jeweiligen Austrittsbereiche der Erfassungsbereiche, bezüglich der Förderrichtung auf gleicher Höhe angeordnet sein. So kann die Ausrichtung einfacher ermittelt werden.

Bei einer weiteren vorteilhaften Ausgestaltung des Verfahrens kann aus wenigstens einem zeitlichen Abstand zwischen wenigstens zwei Erfassungssignalen und wenigstens einem räumlichen Abstand zwischen den entsprechenden Erfassungsbereichen, von denen die Erfassungssignale herrühren, eine Fördergeschwindigkeit der Werkstoffplatte ermittelt werden. Auf diese Weise kann einfach mithilfe der Vermessungsvorrichtung die Fördergeschwindigkeit bestimmt werden. Insbesondere ist es bevorzugt, dass zur Bestimmung der Fördergeschwindigkeit diejenigen Erfassungsbereiche betrachtet werden, welche einen geringen räumlichen Abstand zueinander aufweisen.

Bei einer weiteren vorteilhaften Ausgestaltung des Verfahrens kann die wenigstens eine Werkstoffplatte in wenigstens zwei in Förderrichtung hintereinander oder versetzt hintereinander angeordneten Erfassungsbereichen erfasst werden, wobei aus einem zeitlichen Abstand zwischen den Eintrittssignalen in die hintereinander oder versetzt hintereinander angeordneten Erfassungsbereiche und einem räumlichen Abstand der Eintrittsbereiche der Erfassungsbereiche eine Fördergeschwindigkeit der Werkstoffplatte und/oder wobei aus einem zeitlichen Abstand zwischen den Austrittssignalen aus den hintereinander oder versetzt hintereinander angeordneten Erfassungsbereichen und einem räumlichen Abstand der Austrittsbereiche der Erfassungsbereiche eine Fördergeschwindigkeit der Werkstoffplatte ermittelt werden kann.

Auf diese Weise kann die Fördergeschwindigkeit entweder aus den Eintrittssignalen oder den Austrittssignalen und den entsprechenden räumlichen Abständen ermittelt werden. Alternativ kann aus den Eintrittssignalen und den Austrittssignalen jeweils eine entsprechende Fördergeschwindigkeit ermittelt werden. Diese beiden Fördergeschwindigkeiten können insbesondere gemittelt werden. So kann die Fördergeschwindigkeit genauer bestimmt werden.

Eine weitere vorteilhafte Ausgestaltungsform zeichnet sich dadurch aus, dass die weiteren vorgegebenen, vorgebbaren und/oder bestimmbaren Größe die Fördergeschwindigkeit und/oder der räumliche Abstand zwischen zwei Erfassungsbereichen ist.

Eine vorteilhafte Ausgestaltung der Anlage zeichnet aus, dass eine Steuervorrichtung angeordnet ist, welche mit der Schneidvorrichtung und der Vermessungsvorrichtung derart wirkverbunden ist, dass aus der mit der Vermessungsvorrichtung wenigstens einen ermittelten Abmessung, insbesondere der Länge und/oder der ermittelten Ausrichtung und/oder der ermittelten Winkligkeit der wenigstens einen Werkstoffplatte die Schneideinrichtung geregelt oder gesteuert wird. Hierdurch können Fehler in der Länge oder der Winkligkeit der Werkstoffplatte korrigiert werden, so dass die Werkstoffplatten die gewünschte Länge und Rechtwinkligkeit aufweisen.

Eine weitere vorteilhafte Gestaltung zeichnet aus, dass die Anlage weiter eine Streueinrichtung zum Streuen eines Materials auf eine Fördereinrichtung und eine kontinuierlich arbeitende Presse umfasst.

Im Übrigen gelten die im Zusammenhang mit dem erfindungsgemäßen Verfahren und der erfindungsgemäßen Anlage und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Der Schutzbereich der Erfindung wird durch die unabhängigen Ansprüche definiert.

Es zeigen schematisch

Figur 1    eine Seitenansicht einer Anlage zum Ablängen eines endlosen Plattenstranges zu Werkstoffplatten;

Figur 2    eine Seitenansicht einer Vermessungsvorrichtung der Anlage aus

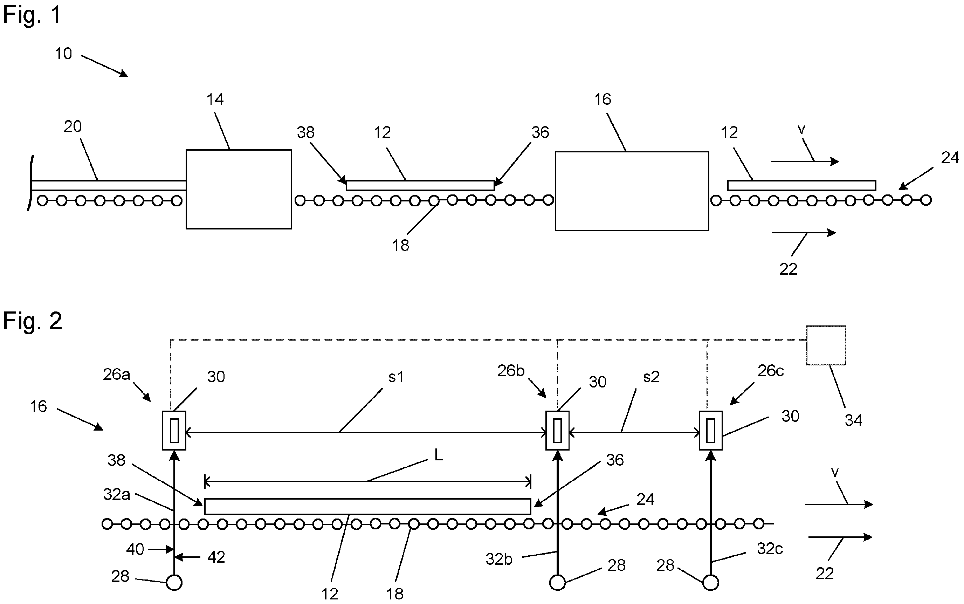

Figur 1    zur Vermessung von Werkstoffplatten;

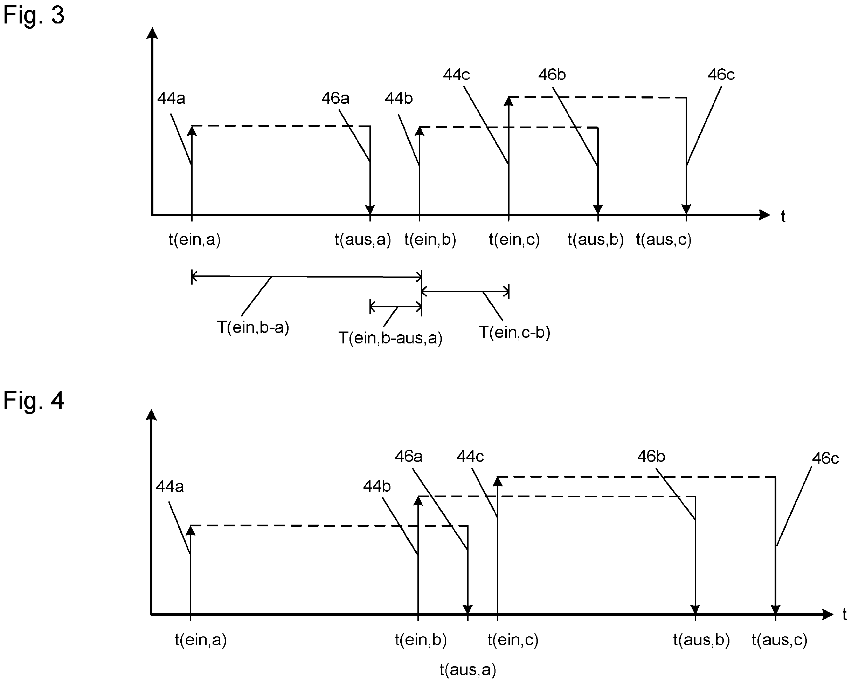

Figur 3    ein zeitlicher Verlauf von Erfassungssignalen, die bei der Erfassung der Werkstoffplatte mit Erfassungseinheiten der Vermessungsvorrichtung aus Figur 2 erzeugt werden, wobei die Länge der vermessenen Werkstoffplatte kleiner ist als ein räumlicher Abstand zwischen den ersten beiden Erfassungseinheiten;

Figur 4    ein zeitlicher Verlauf von Erfassungssignalen analog zur Figur 3, wobei hier die die Länge der vermessenen Werkstoffplatte größer ist als der räumliche Abstand zwischen den ersten beiden Erfassungseinheiten;

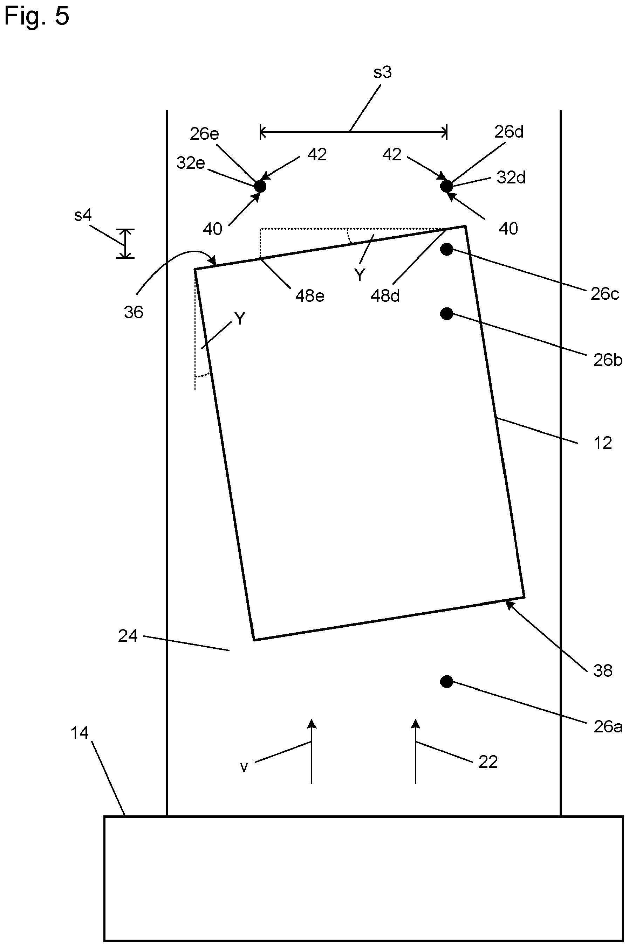

Figur 5    eine Draufsicht auf eine Vermessungsvorrichtung gemäß einem Ausführungsbeispiel, mit welcher eine Ausrichtung einer Werkstoffplatte auf einem Förderweg durch die Vermessungsvorrichtung bestimmt werden kann und die Rechtwinkligkeit der Werkstoffplatte überprüft werden kann.

In den Figuren sind gleiche Bauteile mit gleichen Bezugszeichen versehen.

In der Figur 1 ist ein Teil einer Anlage 10 zum Ablängen eines endlosen Plattenstrangs 20 zu Werkstoffplatten 12 in einer Seitenansicht gezeigt. Die Anlage 10 umfasst beispielhaft eine Schneidvorrichtung 14, eine Vermessungsvorrichtung 16 und eine Fördereinrichtung 18.

Der endlose Plattenstrang 20 und damit die Werkstoffplatten 12 sind als Pressplatten realisiert. Die Pressplatten können beispielsweise mittels einer kontinuierlich arbeitenden Presse aus Streugut gepresst werden. Eine Streueinrichtung und die Presse können dem oben genannten Teil der Anlage 10 vorgeschaltet sein. Beispielsweise kann die Fördereinrichtung 18 von der Presse zu dem oben genannten Teil der Anlage 10 führen. Als Streugut können Partikel, insbesondere Späne, Schnitzel oder Fasern oder dergleichen, aus Holz und/oder anderen nachwachsenden Agrarprodukten und/oder Kunststoff dienen. Das Streugut kann mit Bindemitteln oder Klebemittel versehen sein.

Die Fördereinrichtung 18 ist beispielhaft als Förderbahn realisiert. Mit der Fördereinrichtung 18 wird der zu schneidende endlose Plattenstrang 20 beispielhaft kontinuierlich mit einer Fördergeschwindigkeit v in einer Förderrichtung 22 entlang eines Förderwegs 24 durch die Anlage 10 befördert.

Die Schneidvorrichtung 14 weist beispielsweise eine Mehrfach-Diagonalsäge auf, mit welcher der Plattenstrang 20 in einzelne Werkstoffplatten 12 geschnitten wird. Die Werkstoffplatten 12 werden typischerweise mit einer Länge L zwischen etwa 2 m und 12 m geschnitten. Hierzu wird die Schneidvorrichtung 14 genau auf die erforderliche Länge eingestellt. Die Länge L ist die Abmessung der Werkstoffplatten 12 in Förderrichtung 22.

Die Mehrfach-Diagonalsäge der Schneidwerkvorrichtung 14 kann beispielsweise durch ein oder mehrere auf dem Plattenstrang 20 laufende Messräder getriggert werden. Um etwaige Ungenauigkeiten bei der Länge L der Werkstoffplatten 12 zu korrigieren, werden diese mit der Vermessungsvorrichtung 16 vermessen. Die Schneidvorrichtung 14 wird mithilfe der Informationen aus der Vermessungsvorrichtung 16 entsprechend geregelt, um die gewünschte Länge L für die Werkstoffplatten 12 zu erreichen. So kann über die gemessene Länge L einer Werkstoffplatte 12 die Länge der nachfolgenden Werkstoffplatte 12 eingestellt werden.

Die Vermessungsvorrichtung 16 ist funktional der Schneidvorrichtung 14 nachgeschaltet. In dem gezeigten Ausführungsbeispiel führt die Fördereinrichtung 18 durch die Vermessungsvorrichtung 16. Die Werkstoffplatten 12 werden mit der Vermessungsvorrichtung 16 im kontinuierlichen Betrieb vermessen.

Die Vermessungsvorrichtung 16 weist beispielhaft insgesamt drei Erfassungseinheiten 26a, 26b und 26c auf. Die in Förderrichtung 22 betrachtet zweite Erfassungseinheit 26b und die dritte Erfassungseinheit 26c sind als Gruppe angeordnet. In einer nicht gezeigten Variante kann zusätzlich die erste Erfassungseinheit 26a mit einer weiteren Erfassungseinheit eine erste Gruppe bilden. Es können auch weitere Gruppen von Erfassungseinheiten oder einzelne Erfassungseinheiten vorgesehen sein.

Die Erfassungseinheiten 26a, 26b und 26c sind beispielhaft jeweils als Lichtschranken ausgebildet. Ein jeweiliger Sender 28 ist beispielhaft als Laser ausgebildet, mit welchem ein Laserstrahl mit einem bezüglich der Länge L der Werkstoffplatten 12 vernachlässigbaren Querschnitt erzeugt wird. Alternativ können die Erfassungseinheiten 26a, 26b und 26c mit einer Strahlungsquelle und einem auf die Strahlungsart abgestimmten Empfänger 30 ausgebildet sein. Als Strahlungsart kann neben einer Lichtquelle auch andere elektromagnetische Strahlung wie Mikrowellen oder Röntgenstrahlung eingesetzt werden. Die Sender 28 befinden sich räumlich unterhalb der Förderbahn der Fördereinrichtung 18. Entsprechende Empfänger 30 der Erfassungseinheiten 26a, 26b und 26c sind räumlich oberhalb der Förderbahn angeordnet. Alternativ kann der Sender 28 auch oberhalb der Förderbahn der Fördereinrichtung 18 und der Empfänger 30 unterhalb der Förderbahn angeordnet sein. Mit den Laserstrahlen der Sender 28 wird im Förderweg 24 der Werkstoffplatten 12 jeweils ein Erfassungsbereich 32a, 32b und 32c definiert. Die Erfassungsbereiche 32a, 32b und 32c erstrecken sich beispielhaft räumlich vertikal.

Beim Durchlaufen der Vermessungsvorrichtung 16 wird die Werkstoffplatte 12 mit den Erfassungseinheiten 26a, 26b und 26c in den jeweiligen Erfassungsbereichen 32a, 32b und 32c erfasst. Mit den Erfassungseinheiten 26a, 26b und 26c werden weiter unten näher erläuterte Erfassungssignale in Form von Eintrittssignalen 44a, 44b und 44c und Austrittssignalen 46a, 46b und 46c erzeugt und an eine Auswerteeinrichtung 34 übermittelt.

Jeder Erfassungsbereich 32a, 32b und 32c weist einen Eintrittsbereich 40 und einen Austrittsbereich 42 auf. Der Eintrittsbereich 40 befindet sich auf der der kommenden Werkstoffplatte 12 zugewandten Seite. In den Eintrittsbereich 40 tritt der in Förderrichtung 18 betrachtet vordere Rand 36 der Werkstoffplatte 12 zuerst ein. Der Austrittsbereich 42 befindet sich auf der in Förderrichtung 22 betrachtet abgewandten Seite der jeweiligen Erfassungsbereiche 32a, 32b und 32c. Aus dem Austrittsbereich 42 tritt der hintere Rand 38 der Werkstoffplatte 12 zuletzt aus.

Bei dem gezeigten Ausführungsbeispiel sind die Abmessungen der Erfassungsbereiche 32a, 32b und 32c in Förderrichtung 22 aufgrund des vernachlässigbaren Querschnitts der Laserstrahlen im Verhältnis zur Länge L der Werkstoffplatten 12 so klein, dass die Eintrittsbereiche 40 und die Austrittsbereiche 42 nahezu identisch sind und in dem vorliegenden Ausführungsbeispiel als identisch betrachtet werden können. Insofern können räumliche Abstände zu den Eintrittsbereichen 40 und räumliche Abstände zu den Austrittsbereichen 42 desselben Erfassungsbereichs 32, 32b und 32c als identisch betrachtet werden. Insbesondere können auf dem Empfänger 30 Blenden, insbesondere Schlitzblenden angeordnet sein, welche auch bei einen nicht vernachlässigbaren Querschnitt der Laserstrahlen oder anderer Lichtquellen den Eintrittsbereich 40 und Austrittsbereich 42 auf einen minimalen, insbesondere vernachlässigbaren Abstand verkleinern.

Die beiden ersten Erfassungsbereiche 32a und 32b, respektive der Austrittsbereich 42 des Erfassungsbereichs 32a und der Eintrittsbereich 40 des Erfassungsbereichs 32b, sind in einem räumlichen Abstand s1 in Förderrichtung 22 beispielhaft entlang einer gedachten Geraden angeordnet, welche parallel zur Förderrichtung 22 verläuft. Die beiden letzten Erfassungsbereiche 32b und 32c, respektive der Austrittsbereich 42 des Erfassungsbereichs 32b und der Eintrittsbereich 40 des Erfassungsbereichs 32c, sind mit einem räumlichen Abstand s2 in Förderrichtung 22 entlang der gedachten Geraden angeordnet. Der räumliche Abstand s1 liegt beispielhaft in der Größenordnung von mehreren Metern, beispielsweise etwa zwischen 2 m und 8 m, bevorzugt zwischen 3 m und 6 m. Der räumliche Abstand s2 liegt beispielhaft in der Größenordnung von Zentimetern, beispielsweise etwa zwischen 1 cm und 50 cm, bevorzugt zwischen 3 cm und 40 cm, besonders bevorzugt zwischen 5 cm und 30 cm. Die Erfassungsbereiche 32a, 32b und/oder 32c können statt entlang der gedachten Gerade auch seitlich versetzt hintereinander angeordnet sein.

Die Erfassungseinheiten 26a, 26b und 26c sind so angeordnet und befestigt, dass ihre Relativpositionen zueinander nahezu temperaturunabhängig sind. Dies kann beispielsweise durch die Anordnung der Erfassungseinheiten 26a, 26b und 26c auf einem Trägermaterial mit geringer Wärmeausdehnung erreicht werden. Zusätzlich oder alternativ können temperaturbedingte Änderungen, typsicherweise durch das Trägermaterial, auf welchem die Erfassungseinheiten 26a, 26b und 26c angeordnet sind, der räumlichen Abstände s1 und s2 durch Messen der Temperatur korrigiert oder kompensiert werden. Ferner können die räumlichen Abstände s1 und s2 auch mittels separater Distanzmessungen, beispielsweise mithilfe einer Laserdistanzmessung, gemessen und entsprechend korrigiert werden.

Im Folgenden wird ein Verfahren zur Vermessung der Werkstoffplatten 12 mithilfe der Vermessungsvorrichtung 16 näher erläutert.

Eine geschnittene Werkstoffplatte 12 wird mit der Fördergeschwindigkeit v in Förderrichtung 22 durch die Vermessungsvorrichtung 16 befördert.

In der Figur 3 sind die zeitlichen Verläufe der Erfassungssignale, respektive der Eintrittssignale 44a, 44b und 44c und der Austrittssignale 46a, 46b und 46c, welche durch die Erfassungseinheiten 26a, 26b und 26c beim Durchlauf der Werkstoffplatte 12 erzeugt werden, gezeigt. Dabei dienen die unterschiedlichen Intensitäten lediglich der einfacheren Unterscheidbarkeit. Die Intensitäten der entsprechenden Erfassungssignale der unterschiedlichen Erfassungseinheiten 26a, 26b und 26c sind für die Erfindung nicht wesentlich. Sie können auch gleich sein. Bei dem in Figur 3 gezeigten Beispiel ist beispielhaft die Länge L der Werkstoffplatte 12 kleiner als der räumliche Abstand s1 zwischen der ersten Erfassungseinheit 26a und der zweiten Erfassungseinheit 26b.

Beim Eintritt des vorderen Randes 36 der Werkstoffplatte 12 in den Erfassungsbereich 32a, respektive den Eintrittsbereich 40, wird die Werkstoffplatte 12 mit der in Förderrichtung 22 betrachtet ersten Erfassungseinheit 26a erfasst. Es wird ein Erfassungssignal in Form eines ersten Eintrittssignals 44a beispielhaft als ansteigende Flanke, wie in der Figur 3 gezeigt, erzeugt und ein Eintrittszeitpunkt t(ein, a) erfasst und an die Auswerteeinrichtung 34 übermittelt.

Beim Austritt der Werkstoffplatte 12 aus dem ersten Erfassungsbereich 32a, respektive dem Austritt des hinteren Randes 38 aus dem Austrittsbereich 42 des ersten Erfassungsbereichs 32a, werden mit der ersten Erfassungseinheit 26a ein Erfassungssignal in Form eines ersten Austrittssignals 46a beispielhaft als abfallende Flanke erzeugt, ein Austrittszeitpunkt t(aus, a) erfasst und der Auswerteeinrichtung 34 übermittelt.

Da in dem gezeigten Beispiel die Länge L der Werkstoffplatte 12 kleiner ist als der räumliche Abstand s1 zwischen den ersten beiden Erfassungseinheiten 26a und 26b, tritt der vordere Rand 36 der Werkstoffplatte 12 erst in den Eintrittsbereich 40 des zweiten Erfassungsbereichs 32b der zweiten Erfassungseinheit 26b ein, nachdem der hintere Rand 38 den ersten Erfassungsbereich 32a verlassen hat.

Mit der zweiten Erfassungseinheit 26b werden ein Erfassungssignal in Form eines zweiten Eintrittssignals 44b als ansteigende Flanke erzeugt, ein zweiter Eintrittszeitpunkt t(ein, b) erfasst und an die Auswerteeinrichtung 34 übermittelt.

Da der räumliche Abstand s2 in vorteilhafter Ausführung kleiner ist als die Länge L der Werkstoffplatte 12 wird anschließend mit der dritten Erfassungseinheit 26c beim Eintritt des vorderen Randes 36 in den Eintrittsbereich 40 des dritten Erfassungsbereichs 32c ein Erfassungssignal in Form eines dritten Eintrittssignals 44c als ansteigende Flanke erzeugt, ein dritter Eintrittszeitpunkt t(ein, c) erzeugt und an die Auswerteeinrichtung 34 übermittelt.

Beim Austritt des hinteren Randes 38 der Werkstoffplatte 12 aus dem Austrittsbereich 42 des Erfassungsbereichs 32b der zweiten Erfassungseinheit 26b wird ein Erfassungssignal in Form eines zweiten Austrittssignals 46b erzeugt, ein zweiter Austrittszeitpunkt t(aus, b) erfasst und an die Auswerteeinrichtung 34 übermittelt.

Beim Austritt des hinteren Randes 38 der Werkstoffplatte 12 aus dem Austrittsbereich 42 des Erfassungsbereichs 32c der dritten Erfassungseinheit 26c wird ein Erfassungssignal in Form eines dritten Austrittssignals 46c erzeugt, ein dritter Austrittszeitpunkt t(aus, c) erfasst und an die Auswerteeinrichtung 34 übermittelt.

Mit der Auswerteeinrichtung 34 wird die folgende Auswertung durchgeführt:
Ein zeitlicher Abstand T(ein, b-a) wird als Differenz zwischen dem zweiten Eintrittszeitpunkt T(ein, b) in den zweiten Erfassungsbereich 32b und dem ersten Eintrittszeitpunkt T(ein, a) in den ersten Erfassungsbereich 32a bestimmt. Ferner wird ein zeitlicher Abstand T(ein, c-b) als Differenz zwischen dem dritten Eintrittszeitpunkt t(ein, c) in den dritten Erfassungsbereich 32 und dem zweiten Eintrittszeitpunkt t(ein, b) in den zweiten Erfassungsbereich 32b bestimmt.

Aus den zeitlichen Abständen T(ein, b-a) und T(ein, c-b) und den entsprechenden räumlichen Abständen s1 und s2 wird jeweils eine Geschwindigkeit $v_{mess1}$ beziehungsweise $v_{mess2}$ errechnet. Aus den Geschwindigkeiten $v_{mess1}$ und/oder $v_{mess2}$ wird mithilfe der Vermessungsvorrichtung 16 die Fördergeschwindigkeit v der Werkstoffplatte 12 durch die Vermessungsvorrichtung 16 ermittelt oder festgelegt. Alternativ kann die mit einem Messrad gemessene Fördergeschwindigkeit v einer Werkstoffplatte 12 mit der in der Vermessungsvorrichtung 16 gemessenen Fördergeschwindigkeit v verglichen und entsprechend gemittelt und/oder korrigiert werden.

Die jeweiligen Fördergeschwindigkeiten $v_{mess1}$ und/oder $v_{mess2}$ werden als Quotient aus dem entsprechenden zeitlichen Abstand und dem zurückgelegten räumlichen Abstand nachfolgenden Form berechnet:

$$v_{mess1} = s1 \div T(ein, b\text{-}a)$$

$$v_{mess2} = s2 \div T(ein, c\text{-}b)$$

Ferner wird mit der Auswerteeinrichtung 34 ein zeitlicher Abstand T(ein, b - aus, a) als Differenz zwischen dem Eintrittszeitpunkt t(ein, b) des vorderen Randes 36 der Werkstoffplatte 12 in den zweiten Erfassungsbereich 32b und dem Austrittszeitpunkt t(aus, a) des hinteren Randes 38 aus dem ersten Erfassungsbereich 32a berechnet:

$$T(ein, b - aus, a) = t(ein, b) - t(aus, a)$$

Aus dem zeitlichen Abstand T(ein, b-aus, a) und dem zurückgelegten räumlichen Abstand s1 wird mithilfe der Fördergeschwindigkeit v der Werkstoffplatte 12 die Länge L der Werkstoffplatte 12 nach folgender Formel bestimmt:

$$L = s1 - v \cdot T(ein, b - aus, a)$$

Anstelle des zeitlichen Abstands T(ein, b - aus,

15        EP 3 680 604 B1        16

a) zwischen dem Eintritt in den zweiten Erfassungsbereich 32b und des Austritts aus dem ersten Erfassungsbereich 32a kann auch der zeitliche Abstand zwischen dem Eintritt in den dritten Erfassungsbereich 32c und dem Austritt aus dem ersten Erfassungsbereich 32a oder dem Eintritt in den dritten Erfassungsbereich 32c und dem Austritt aus dem zweiten Erfassungsbereich 32b und den entsprechenden räumlichen Abständen s1+s2 oder s2 verwendet werden. Um einen Messfehler möglichst gering zu halten, kann eine Kombination von Erfassungsbereichen 32a, 32b und 32c und eine entsprechende Kombination von Eintrittssignalen 44a, 44b, 44c und Austrittssignalen 46a, 46b, 46c verwendet werden, bei denen sich die kleinsten zeitlichen Abstände T ergeben.

In der Figur 4 ist der zeitliche Verlauf der Eintrittssignale 44a, 44b und 44c und der Austrittssignale 46a, 46b und 46c für den Fall gezeigt, dass die Länge L der Werkstoffplatte 12 größer ist als der räumliche Abstand s1 zwischen dem ersten Erfassungsbereich 32a und dem zweiten Erfassungsbereich 32b. Daher liegt der Eintrittszeitpunkt t(ein, b) des vorderen Randes 36 der Werkstoffplatte 12 in den zweiten Erfassungsbereich 32b zeitlich vor dem Austritt t(aus, a) des hinteren Randes 38 aus dem ersten Erfassungsbereich 32a. Da der zeitlichen Abstand T(ein, b - aus, a) als Differenz zwischen dem Eintrittszeitpunkt t(ein, b) und dem Austrittszeitpunkt t(aus, a) gebildet wird, erhält der Wert für den der zeitlichen Abstand T(ein, b - aus, a) ein negatives Vorzeichen. Das Produkt aus der Fördergeschwindigkeit v und dem zeitlichen Abstand T(ein, b - aus, a) gemäß obiger Formel wird in diesem Fall zu dem räumlichen Abstand s1 hinzu addiert, sodass ich eine entsprechend größere Länge L ergibt.

In der Figur 5 ist eine Vermessungsvorrichtung 16 gemäß einem zweiten Ausführungsbeispiel in der Draufsicht gezeigt. Im Unterschied zu dem ersten Ausführungsbeispiel aus den Figuren 1 bis 4 sind bei dem zweiten Ausführungsbeispiel zwei Erfassungseinheiten 26d und 26e und die jeweiligen Erfassungsbereiche 32d und 32e in Förderrichtung 22 betrachtet nebeneinander beispielhaft auf einer Höhe in einem räumlichen Abstand s3 angeordnet.

Der Erfassungsbereich 32d der Erfassungseinheit 26d befindet sich dabei im Bereich des in Förderrichtung 22 betrachtet rechten Randes der Fördereinrichtung 18. Der Erfassungsbereich 32e der Erfassungseinheit 26e befindet sich im Bereich des linken Randes der Fördereinrichtung 18.

Mit den Erfassungseinheiten 26d und 26e kann eine Ausrichtung des vorderen Randes 36 der Werkstoffplatte 12 und/oder eine Ausrichtung des hinteren Randes 38 relativ zur Förderrichtung 22 bestimmt und/oder eine Abweichung von der Rechtwinkligkeit der Werkstoffplatte 12 erfasst werden. Hierzu wird aus einem zeitlichen Abstand zwischen dem Eintrittszeitpunkt des vorderen Randes 36 in den rechten Erfassungsbereich 32d und des Eintrittszeitpunkts in den linken Erfassungsbereich 32e und der Fördergeschwindigkeit v eine Strecke s4 bestimmt. Die Strecke s4 erstreckt sich parallel zur Förderrichtung 22 und damit senkrecht zur Strecke s3. Die Strecke s4 entspricht dem Abstand in Förderrichtung 22 zwischen einer Eintrittsstelle 48d am vorderen Rand 36, welche in den rechten Erfassungsbereich 32d eintritt, und einer Eintrittsstelle 48e am vorderen Rand 36, welche in den linken Erfassungsbereich 32e eintritt.

Beispielhaft auf trigonometrischem Wege wird ein Neigungswinkel Y zwischen dem vorderen Rand 36 und der Strecke s3 berechnet. Sofern die Werkstoffplatte 12 rechtwinklig ist, entspricht der Neigungswinkel Y dem Neigungswinkel zwischen den seitlichen Rändern der Werkstoffplatte 12 und der Förderrichtung 22.

Falls der Neigungswinkel Y ungleich 0° ist, wird davon ausgegangen, dass die Werkstoffplatte 12 entweder schräg auf der Förderbahn der Fördereinrichtung 18 liegt und/oder die Werkstoffplatte 12 nicht rechtwinklig ist. In beiden Fällen kann eine entsprechende Warnung ausgegeben werden. Daraufhin können entsprechende Gegenmaßnahmen ergriffen werden. Beispielsweise kann die Anlage 10 angehalten werden.

Alternativ oder zusätzlich kann analog zum vorderen Rand 36 auch der hintere Rand 38 der Werkstoffplatte 12 zur Bestimmung des entsprechenden Neigungswinkels Y des hinteren Randes 38 gegenüber der Strecke s3 herangezogen werden. Dabei wird jeweils der Austrittszeitpunkt des hinteren Randes 38 aus den Erfassungsbereichen 32d und 32e ermittelt. Aus dem Neigungswinkel Y des vorderen Randes 36 der Werkstoffplatte 12 und dem Neigungswinkel Y des hinteren Randes der Werkstoffplatte 12 kann zudem die Winkligkeit der Werkstoffplatte 12 festgestellt werden. Falls beide Neigungswinkel Y identisch, jedoch ungleich 0° sind, so ist die Werkstoffplatte 12 rechtwinklig ausgebildet und liegt nur schräg auf der Förderbahn der Fördereinrichtung 18. Eine Bestimmung der Länge L der Werkstoffplatte 12 kann dann dadurch erfolgen, dass der gemessene Wert für die Länge L mit dem Kosinus des Neigungswinkes Y entsprechend korrigiert wird.

Bei einem nicht gezeigten Ausführungsbeispiel können die Merkmale des ersten Ausführungsbeispiels zur Bestimmung der Länge L der Werkstoffplatte 12 und/oder zur Bestimmung der Fördergeschwindigkeit v und die Merkmale des zweiten Ausführungsbeispiels zur Bestimmung der Ausrichtung der Werkstoffplatte 12 relativ zur Förderrichtung 22 und/oder zur Erfassung einer Abweichung von einer Rechtwinkligkeit kombiniert werden.

Bei dem zweiten Ausführungsbeispiel können auch mehr als zwei Erfassungseinheiten 26a, 26b, 26c, 26d, 26e mit entsprechenden Erfassungsbereichen 32 a, 32b, 32c, 32d, 32e nebeneinander angeordnet sein. Die Erfassungsbereiche 32 a, 32b, 32c, 32d, 32e können auch versetzt zueinander angeordnet sein. In diesem Fall verlaufen die entsprechenden Strecken zwischen den Erfassungsbereichen 32 a, 32b, 32c, 32d, 32e nicht senkrecht zur Förderrichtung 22.

Bezugszeichenliste P1594:

| | |
|---|---|
| 10 | Anlage |
| 12 | Werkstoffplatte |
| 14 | Schneidvorrichtung |
| 16 | Vermessungsvorrichtung |
| 18 | Fördereinrichtung |
| 20 | Plattenstrang |
| 22 | Förderrichtung |
| 24 | Förderweg |
| 26 a, b, c, d, e | Erfassungseinheit |
| 28 | Sender |
| 30 | Empfänger |
| 32 a, b, c, d, e | Erfassungsbereich |
| 34 | Auswerteeinrichtung |
| 36 | Rand |
| 38 | Rand |
| 40 | Eintrittsbereich |
| 42 | Austrittsbereich |
| 44 a, b, c | Eintrittssignal |
| 46 a, b, c | Austrittssignal |
| 48 d, e | Eintrittsstelle |
| v | Fördergeschwindigkeit |
| L | Länge |
| s1 | Abstand 32a, 32b |
| s2 | Abstand 32b, 32c |
| s3 | Abstand 32d, 32e |
| s4 | Abstand 48d, 48e |
| γ | Neigungswinkel |
| t | Zeit |
| t(ein, a) | Eintrittszeitpunkt erster Erfassungsbereich |
| t(ein, b) | Eintrittszeitpunkt zweiter Erfassungsbereich |
| t(ein, c) | Eintrittszeitpunkt dritter Erfassungsbereich |
| t(aus, a) | Austrittszeitpunkt erster Erfassungsbereich |
| t(aus, b) | Austrittszeitpunkt zweiter Erfassungsbereich |
| t(aus, c) | Austrittszeitpunkt dritter Erfassungsbereich |
| T(ein,b-a) | Zeitlicher Abstand zwischen t(ein, a) und t(ein, b) |
| T(ein,c-b) | Zeitlicher Abstand zwischen t(ein, b) und t(ein, c) |
| T(ein,b-aus,a) | Zeitlicher Abstand zwischen t(ein, b) und t(aus, a) |

## Patentansprüche

1. Anlage zur Herstellung von Werkstoffplatten, mit wenigstens einer Fördereinrichtung (18) zum Beförderung eines endlosen Plattenstrangs (20) und der Werkstoffplatten (12) durch die Anlage (10), mit wenigstens einer Schneidvorrichtung (14) zum Schneiden des endlosen Plattenstrangs (20) zu Werkstoffplatten (12) und mit wenigstens einer Vermessungsvorrichtung (16) zur Vermessung der Werkstoffplatten (12), wobei die wenigstens eine Vermessungsvorrichtung (16) der wenigstens einen Schneidevorrichtung (14) bezüglich des Förderwegs (24) in einer Förderrichtung (22) durch die Anlage (10) nachgeschaltet ist,

wobei in der Vermessungsvorrichtung (16) wenigstens drei Erfassungseinheiten (26a, 26b, 26c; 26d, 26e), deren jeweilige Erfassungsbereiche (32a, 32b, 32c; 32d, 32e) zueinander beabstandet im Förderweg (24) der Werkstoffplatten (12) angeordnet sind und mit denen wenigstens eine Werkstoffplatte (12) in den jeweiligen Erfassungsbereichen (32a, 32b, 32c; 32d, 32e) erfasst werden kann, während die Werkstoffplatte (12) durch die Vermessungsvorrichtung (16) geführt wird,
und mit wenigstens einer Auswerteeinrichtung (34), welche funktional mit den wenigstens drei Erfassungseinheiten (26a, 26b, 26c; 26d, 26e) verbunden ist und mit der aus Erfassungssignalen der wenigstens drei Erfassungseinheiten (26a, 26b, 26c; 26d, 26e) wenigstens eine Abmessung, insbesondere eine Länge (L) der erfassten wenigstens einen Werkstoffplatte (12) ermittelt werden kann,
**dadurch gekennzeichnet, dass** die wenigstens drei zwei Erfassungseinheiten (26a, 26b, 26c; 26d, 26e) so ausgestaltet sind, dass wenigstens zwei Erfassungsbereiche bezüglich der Förderrichtung (22) nebeneinander angeordnet sind und wenigstens zwei Erfassungsbereiche bezüglich der Förderrichtung (22) hintereinander angeordnet sind und dass mit diesen ein jeweiliges Erfassungssignal in Form eines Eintrittssignals (44a, 44b, 44c) beim Eintritt der wenigstens einen Werkstoffplatte (12) in den jeweiligen Erfassungsbereich (32a, 32b, 32c; 32d, 32e) und/oder ein jeweiliges Erfassungssignal in Form eines Austrittssignals (46a, 46b, 46c) beim Austritt der wenigstens einen Werkstoffplatte (12) aus dem jeweiligen Erfassungsbereich (32a, 32b, 32c; 32d, 32e) erzeugt werden kann, die wenigstens eine Auswerteeinrichtung (34) so ausgestaltet ist, dass mit dieser wenigstens ein zeitlicher Abstand (T(ein, b-a), T (ein, c-b), T (ein, b - aus, a)) zwischen wenigstens zwei Erfassungssignalen ermittelt werden kann und aus wenigstens einem zeitlichen Abstand (T(ein, b-a), T (ein, c-b), T (ein, b - aus, a)) zwischen wenigstens zwei Erfassungssignalen und wenigstens einer weiteren vorgegebenen, vorgebbaren und/oder messbaren Größe wenigstens eine Abmessung, insbesondere eine Länge (L) und/oder eine Ausrichtung und/oder eine Winkligkeit der wenigstens einen Werkstoffplatte (12) ermittelt werden kann.

2. Anlage nach Anspruch 1, **dadurch gekennzeichnet, dass** wenigstens zwei Erfassungseinheiten (26a, 26b, 26c; 26d, 26e) als Gruppe angeordnet sind.

3. Anlage nach Anspruch 1 oder 2 **dadurch gekennzeichnet, dass** wenigstens eine Erfassungseinheit (26a, 26b, 26c; 26d, 26e) berührungslos arbeitet.

4. Anlage nach einem der vorigen Ansprüche, **dadurch gekennzeichnet, dass** wenigstens ein Teil wenigstens einer Erfassungseinheit (26a, 26b, 26c; 26d, 26e) räumlich oberhalb des Förderwegs (24) und/oder wenigstens ein Teil wenigstens einer Erfassungseinheit (26a, 26b, 26c; 26d, 26e) räumlich unterhalb des Förderwegs (24) und/oder wenigstens ein Teil wenigstens einer Erfassungseinheit räumlich neben dem Förderweg (24) angeordnet ist.

5. Anlage nach einem der vorigen Ansprüche, **dadurch gekennzeichnet, dass** die Vermessungsvorrichtung (16) wenigstens ein Mittel aufweist zur Bestimmung einer Fördergeschwindigkeit (v) der Werkstoffplatte (12) in Förderrichtung (22).

6. Anlage nach einem der vorigen Ansprüche, **dadurch gekennzeichnet, dass** eine Steuervorrichtung angeordnet ist, welche mit der Schneidvorrichtung (14) und der Vermessungsvorrichtung (16) derart wirkverbunden ist, dass aus der mit der Vermessungsvorrichtung (16) wenigstens einen ermittelten Abmessung, insbesondere der Länge (L) und/oder der ermittelten Ausrichtung und/oder der ermittelten Winkligkeit der wenigstens einen Werkstoffplatte (12) die Schneideinrichtung (14) geregelt oder gesteuert wird.

7. Anlage nach einem der vorigen Ansprüche, **dadurch gekennzeichnet, dass** die Anlage (10) weiter eine Streueinrichtung zum Streuen eines Materials auf eine Fördereinrichtung und eine kontinuierlich arbeitende Presse umfasst.

8. Verfahren zum Betreiben einer Anlage zur Herstellung von Werkstoffplatten, mit wenigstens einer Fördereinrichtung (18) zum Beförderung eines endlosen Plattenstrangs (20) und der Werkstoffplatten (12) durch die Anlage (10), mit wenigstens einer Schneidvorrichtung (14) zum Schneiden des endlosen Plattenstrangs (20) zu Werkstoffplatten (12) und einer Vermessungsvorrichtung (16) zur Vermessung von Werkstoffplatten (12), bei dem wenigstens eine Werkstoffplatte (12) in einer Förderrichtung (22) auf einem Förderweg (24) durch eine Vermessungsvorrichtung (16) geführt wird,

die wenigstens eine Werkstoffplatte (12) in wenigstens drei Erfassungsbereichen (32a, 32b, 32c; 32d, 32e), die zueinander beabstandet in dem Förderweg (24) angeordnet sind, mit entsprechenden Erfassungseinheiten (26a, 26b, 26c; 26d, 26e) erfasst wird, und aus Erfassungssignalen der Erfassungseinheiten (26a, 26b, 26c; 26d, 26e), die aus der Erfassung der wenigstens einen Werkstoffplatte (12) herrühren, wenigstens eine Abmessung, insbesondere eine Länge (L) der erfassten Werkstoffplatte (12) ermittelt wird,

**dadurch gekennzeichnet, dass** beim Eintritt der wenigstens einen Werkstoffplatte (12) in wenigstens einen Erfassungsbereich (32a, 32b, 32c; 32d, 32e) wenigstens ein Erfassungssignal in Form eines Eintrittssignals (44a, 44b, 44c) erzeugt wird und/oder beim Austritt der wenigstens einen Werkstoffplatte (12) aus wenigstens einem Erfassungsbereich (32a, 32b, 32c; 32d, 32e) wenigstens ein Erfassungssignal in Form eines Austrittssignals (46a, 46b, 46c) erzeugt wird, wobei wenigstens zwei Erfassungsbereiche bezüglich der Förderrichtung (22) nebeneinander angeordnet sind UND wenigstens zwei Erfassungsbereiche bezüglich der Förderrichtung (22) hintereinander angeordnet sind, und wobei wenigstens ein zeitlicher Abstand (T(ein, b-a), T (ein, c-b), T (ein, b - aus, a)) zwischen wenigstens zwei Erfassungssignalen ermittelt wird und aus dem wenigstens einen zeitlichen Abstand (T(ein, b-a), T (ein, c-b), T (ein, b - aus, a)) zwischen wenigstens zwei Erfassungssignalen und wenigstens einer weiteren vorgegebenen vorgebbaren und/oder bestimmbaren Größe wenigstens eine Abmessung, insbesondere eine Länge (L) und/oder eine Ausrichtung und/oder eine Winkligkeit der wenigstens einen Werkstoffplatte (12) ermittelt wird.

9. Verfahren nach Anspruch 8, **dadurch gekennzeichnet, dass** wenigstens eine Werkstoffplatte (12) in wenigstens zwei in Förderrichtung (22) hintereinander angeordneten Erfassungsbereichen (32a, 32b, 32c) erfasst wird, ein zeitlicher Abstand (T (ein, b - aus, a)) zwischen einem Austrittssignal (46a) beim Austritt der Werkstoffplatte (12) aus einem in Förderrichtung (22) vorderen Erfassungsbereich (32a) und einem Eintrittssignal (44b) beim Eintritt der Werkstoffplatte (12) in einen in Förderrichtung (22) hinter dem vorderen Erfassungsbereich (32a) gelegenen hinteren Erfassungsbereich (32b) ermittelt wird, und aus dem zeitlichen Abstand (T (ein, b - aus, a)), der Fördergeschwindigkeit (v) der Werkstoffplatte (12) und dem räumlichen Abstand (s1) zwischen einem Austrittsbereich (42) des vorderen Erfassungsbereichs (32a) und einem Eintrittsbereich (40) des hinteren Erfassungsbereichs (32b) die Länge (L) der Werkstoffplatte (12) in Förderrichtung (22) ermittelt wird.

10. Verfahren nach Anspruch 8 oder 9, **dadurch gekennzeichnet, dass** wenigstens eine Werkstoffplatte (12) in wenigstens zwei in Förderrichtung (22) nebeneinander angeordneten Erfassungsbereichen (32d, 32e) erfasst werden, ein zeitlicher Abstand zwischen den jeweiligen Eintrittssignalen ermittelt wird, und aus dem zeitlichen Abstand zwischen den Eintrittssignalen, einem räumlichen Abstand (s3) der jeweiligen Eintrittsbereiche (40) der Erfassungsbereiche (32d, 32e) und der Fördergeschwindigkeit (v) eine Ausrichtung, insbesondere ein Neigungswinkel (Y) des in Förderrichtung (22) vorderen Randes (36) der Werkstoffplatte (12) relativ zur Förderrichtung (22) ermittelt wird und/oder

ein zeitlicher Abstand zwischen den jeweiligen Austrittssignalen ermittelt wird und aus dem zeitlichen Abstand zwischen den Austrittssignalen, einem räumlichen Abstand (s3) der jeweiligen Austrittsbereiche der Erfassungsbereiche (32d, 32e) und der Fördergeschwindigkeit (v) eine Ausrichtung, insbesondere ein Neigungswinkel (Y) des in Förderrichtung (22) hinteren Randes (38) der Werkstoffplatte (12) relativ zur Förderrichtung (22) ermittelt wird.

11. Verfahren nach einem der Ansprüche 8 bis 10, **dadurch gekennzeichnet, dass** aus wenigstens einem zeitlichen Abstand (T(ein, b-a), T (ein, c-b)) zwischen wenigstens zwei Erfassungssignalen und wenigstens einem räumlichen Abstand (s1, s2) zwischen den entsprechenden Erfassungsbereichen (32a, 32b, 32c), von denen die Erfassungssignale herrühren, eine Fördergeschwindigkeit (v) der Werkstoffplatte (12) ermittelt wird.

12. Verfahren nach einem der Ansprüche 8 bis 11, **dadurch gekennzeichnet, dass** die wenigstens eine Werkstoffplatte (12) in wenigstens zwei in Förderrichtung (22) hintereinander oder versetzt hintereinander angeordneten Erfassungsbereichen (32a, 32b, 32c) erfasst wird, und dass aus einem zeitlichen Abstand (T(ein, b-a), T (ein, c-b)) zwischen den Eintrittssignalen (44a, 44b, 44c) in die hintereinander oder versetzt hintereinander angeordneten Erfassungsbereiche (32a, 32b, 32c) und einem räumlichen Abstand (s1, s2) der Eintrittsbereiche (40) der Erfassungsbereiche (32a, 32b, 32c) eine Fördergeschwindigkeit (v) der Werkstoffplatte (12) ermittelt wird und/oder aus einem zeitlichen Abstand (T (aus, b-a), T (aus, c-b)) zwischen den Austrittssignalen (46a, 46b, 46c) aus den hintereinander oder versetzt hintereinander angeordneten Erfassungsbereichen (32a, 32b, 32c) und einem räumlichen Abstand (s1, s2) der Austrittsbereiche (42) der Erfassungsbereiche (32a, 32b, 32c) eine Fördergeschwindigkeit (v) der Werkstoffplatte (12) ermittelt wird.

13. Verfahren nach einem der Ansprüche 8 bis 12, **dadurch gekennzeichnet, dass** die weiteren vorgegebenen, vorgebbaren und/oder bestimmbaren Größe die Fördergeschwindigkeit (v) und/oder der räumliche Abstand (s1, s2, s3) zwischen zwei Erfassungsbereichen (32a, 32b, 32c; 32d, 32e) ist.

**Claims**

1. Plant for producing material plates, having at least one conveying device (18) for conveying an endless plate strand (20) and the material plates (12) through the plant (10), having at least one cutting device (14) for cutting the endless plate strand (20) to form material plates (12) and having at least one measuring device (16) for measuring the material plates (12), wherein the at least one measuring device (16) is connected downstream of the at least one cutting device (14) with respect to the conveying path (24) in a conveying direction (22) through the plant (10),

    wherein in the measuring device (16) there are at least three detection units (26a, 26b, 26c; 26d, 26e), the respective detection areas (32a, 32b, 32c; 32d, 32e) of which are arranged at a distance from one another in the conveying path (24) of the material plates (12) and with which at least one material plate (12) is detected in the respective detection areas (32a, 32b, 32c; 32d, 32e) while the material plate (12) is guided through the measuring device (16), and having at least one evaluation device (34), which is functionally connected to the at least three detection units (26a, 26b, 26c; 26d, 26e) and with which at least one dimension, in particular a length (L), of the detected at least one material plate (12) can be determined from detection signals of the at least three detection units (26a, 26b, 26c, 26d, 26e), **characterized in that** the at least three detection units (26a, 26b, 26c; 26d, 26e) are designed such that at least two detection areas are arranged next to one another with respect to the conveying direction (22) and at least two detection areas are arranged one behind the other with respect to the conveying direction (22) and that with these a respective detection signal in the form of an entry signal (44a, 44b, 44c) can be generated upon entry of at least one material plate (12) into the respective detection area (32a, 32b, 32c; 32d, 32e) and/or a respective detection signal in the form of an exit signal (46a, 46b, 46c) can be generated upon exit of the at least one material plate (12) from the respective detection area (32a, 32b, 32c; 32d, 32e), the at least one evaluation device (34) being designed such that it can be used to determine at least one time interval (T(on, b-a), T (on, c-b), T (on, b-off, a)) between at least two detection signals

and at least one dimension, in particular a length (L) and/or an orientation and/or an angularity of the at least one material plate (12) can be determined from at least one time interval (T(on, b-a), T (on, c-b), T (on, b-off, a)) between at least two detection signals and at least one further predetermined, predeterminable and/or measurable variable.

2. Plant according to claim 1, **characterized in that** at least two detection units (26a, 26b, 26c; 26d, 26e) are arranged as a group.

3. Plant according to claim 1 or 2, **characterized in that** at least one detection unit (26a, 26b, 26c; 26d, 26e) operates without contact.

4. Plant according to one of the preceding claims, **characterized in that** at least a part of at least one detection unit (26a, 26b, 26c; 26d, 26e) is arranged spatially above the conveying path (24) and/or at least a part of at least one detection unit (26a, 26b, 26c; 26d, 26e) is arranged spatially below the conveying path (24) and/or at least a part of at least one detection unit is arranged spatially next to the conveying path (24).

5. Plant according to one of the preceding claims, **characterized in that** the measuring device (16) has at least one means for determining a conveying speed (v) of the material plate (12) in the conveying direction (22).

6. Plant according to one of the preceding claims, **characterized in that** a control device is arranged, which is operatively connected to the cutting device (14) and the measuring device (16) in such a way that the cutting device (14) is regulated or controlled from the at least one dimension determined by the measuring device (16), in particular the length (L) and/or the determined orientation and/or the determined angularity of the at least one material plate (12).

7. Plant according to one of the preceding claims, **characterized in that** the plant (10) further comprises a spreading device for spreading a material onto a conveying device and a continuously operating press.

8. Method for operating a plant for producing material plates, having at least one conveying device (18) for conveying an endless plate strand (20) and the material plates (12) through the plant (10), having at least one cutting device (14) for cutting the endless plate strand (20) to form material plates (12) and a measuring device (16) for measuring material plates (12), in which at least one material plate (12) is guided in a conveying direction (22) on a conveying path (24) through a measuring device (16), which detects at least one material plate (12) in at least three detection areas (32a, 32b, 32c; 32d, 32e), which are arranged at a distance from one another in the conveying path (24), with corresponding detection units (26a, 26b, 26c; 26d, 26e), and from detection signals of the detection units (26a, 26b, 26c; 26d, 26e), which originate from the detection of the at least one material plate (12), at least one dimension, in particular a length (L) of the detected material plate (12), is determined,

**characterized in that**,

when the at least one material plate (12) enters at least one detection area (32a, 32b, 32c; 32d, 32e) at least one detection signal is generated in the form of an entry signal (44a, 44b, 44c) and/or when the at least one material plate (12) exits from at least one detection area (32a, 32b, 32c; 32d, 32e) at least one detection signal is generated in the form of an exit signal (46a, 46b, 46c),

wherein at least two detection areas are arranged next to one another with respect to the conveying direction (22) AND at least two detection areas are arranged one behind the other with respect to the conveying direction (22), and wherein at least one time interval (T(on, b-a), T (on, c-b), T (on, b-off, a)) between at least two detection signals is determined and at least one dimension, in particular a length (L) and/or an orientation and/or an angularity of the at least one material plate (12), is determined from the at least one time interval (T(on, b-a), T (on, c-b), T (on, b-off, a)) between at least two detection signals and at least one further predetermined, predeterminable and/or determinable variable.

9. Method according to claim 8, **characterized in that** at least one material plate (12) is detected in at least two detection areas (32a, 32b, 32c) arranged one behind the other in the conveying direction (22), a time interval (T (on, b-off, a)) is determined between an exit signal (46a) when the material plate (12) exits a front detection area (32a) in the conveying direction (22) and an entry signal (44b) when the material plate (12) enters a rear detection area (32b) located behind the front detection area (32a) in the conveying direction (22), and the length (L) of the material plate (12) in the conveying direction (22) is determined from the time interval (T (on, b-off, a)), the conveying speed (v) of the material plate (12) and the spatial distance (s1) between an exit area (42) of the front detection area (32a) and an entry area (40) of the rear detection area (32b).

**10.** Method according to claim 8 or 9, **characterized in that** at least one material plate (12) is detected in at least two detection areas (32d, 32e) arranged next to one another in the conveying direction (22), a time interval between the respective entry signals is determined, and an orientation, in particular an angle of inclination (Y) of the front edge (36) of the material plate (12) relative to the conveying direction (22), is determined from the time interval between the entry signals, a spatial distance (s3) of the respective entry areas (40) of the detection areas (32d, 32e) and the conveying speed (v) and/or
a time interval between the respective exit signals is determined and an orientation, in particular an angle of inclination (Y) of the rear edge (38) of the material plate (12) relative to the conveying direction (22), is determined from the time interval between the exit signals, a spatial distance (s3) of the respective exit areas of the detection areas (32d, 32e) and the conveying speed (v).

**11.** Method according to one of claims 8 to 10, **characterized in that** a conveying speed (v) of the material plate (12) is determined from at least one time interval (T(on, b-a), T (on, c-b)) between at least two detection signals and at least one spatial distance (s1, s2) between the corresponding detection areas (32a, 32b, 32c) from which the detection signals originate.

**12.** Method according to one of claims 8 to 11, **characterized in that** the at least one material plate (12) is detected in at least two detection areas (32a, 32b, 32c) arranged one behind the other or offset one behind the other in the conveying direction (22), and **in that** a conveying speed (v) of the material plate (12) is determined from a time interval (T(on, b-a), T (on, c-b)) between the entry signals (44a, 44b, 44c) in the detection areas (32a, 32b, 32c) arranged one behind the other or offset one behind the other and a spatial distance (s1, s2) of the entry areas (40) of the detection areas (32a, 32b, 32c) and and/or a conveying speed (v) of the material plate (12) is determined from a time interval (T (off, b-a), T (off, c-b)) between the exit signals (46a, 46b, 46c) from the detection areas (32a, 32b, 32c) arranged one behind the other or offset one behind the other and a spatial distance (s1, s2) of the exit areas (42) of the detection areas (32a, 32b, 32c).

**13.** Method according to one of claims 8 to 12, **characterized in that** the further predetermined, predeterminable and/or determinable variable is the conveying speed (v) and/or the spatial distance (s1, s2, s3) between two detection areas (32a, 32b, 32c; 32d, 32e).

## Revendications

**1.** Installation pour la fabrication de panneaux de matériau, comportant au moins un dispositif de transport (18) pour le transport d'un lé de panneau sans fin (20) et des panneaux de matériau (12) à travers l'installation (10), avec au moins un dispositif de coupe (14) pour la découpe du lé de panneau sans fin (20) en panneaux de matériau (12) et avec au moins un dispositif de mesure (16) pour la mesure des panneaux de matériau (12), dans laquelle l'au moins un dispositif de mesure (16) est monté en aval de l'au moins un dispositif de coupe (14) sur le trajet de transport (24) dans un sens de transport (22) à travers l'installation (10),

dans laquelle le dispositif de mesure (16) comprend au moins trois unités de détection (26a, 26b, 26c ; 26d, 26e) dont les zones de détection (32a, 32b, 32c ; 32d, 32e) respectives sont écartées les unes des autres sur le trajet de transport (24) des panneaux de matériau (12) et avec lesquelles au moins un panneau de matériau (12) peut être détecté dans les zones de détection (32a, 32b, 32c ; 32d, 32e) respectives pendant que le panneau de matériau (12) est guidé à travers le dispositif de mesure (16),
et avec au moins un dispositif d'analyse (34) en liaison fonctionnelle avec les au moins trois unités de détection (26a, 26b, 26c ; 26d, 26e) et avec lequel au moins une dimension, en particulier une longueur (L) de l'au moins un panneau de matériau (12) détecté peut être déterminée à partir de signaux de détection des au moins trois unités de détection (26a, 6b, 26c ; 26d, 26e),
**caractérisée en ce que** les au moins trois unités de détection (26a, 26b, 26c ; 26d, 26e) sont conçues de telle manière qu'au moins deux zones de détection sont disposées l'une à côté de l'autre par rapport au sens de transport (22) et au moins deux zones de détection sont disposées l'une à la suite de l'autre par rapport au sens de transport (22) et **en ce que** celles-ci peuvent générer un signal de détection sous la forme d'un signal d'entrée (44a, 44b, 44c) quand l'au moins un panneau de matériau (12) entre dans la zone de détection (32a, 32b, 32c ; 32d, 32e) correspondante et/ou un signal de détection correspondant sous la forme d'un signal de sortie (46a, 46b, 46c) quand l'au moins un panneau de matériau (12) sort de la zone de détection (32a, 32b, 32c ; 32d, 32e) correspondante, l'au moins un dispositif d'analyse (34) est conformé de façon à pouvoir déterminer au moins un écart dans le temps (T (entrée, b-a), T (entrée, c-b), T (entrée, b-sortie, a)) entre au moins deux signaux de détection et à pouvoir déterminer une dimension, en particulier une longueur (L) et/ou une orientation et/ou une angulation, de l'au moins un panneau de matériau (12) à partir d'au moins un écart dans le temps (T(entrée, b-a), T (entrée, c-b), T (entrée, b-sortie, a)) entre au moins deux signaux de détection et d'au moins une autre grandeur prédéfinie.

2. Installation selon la revendication 1, **caractérisée en ce qu'**au moins deux unités de détection (26a, 26b, 26c ; 26d, 26e) sont disposées en groupe.

3. Installation selon la revendication 1 ou 2, **caractérisée en ce qu'**au moins une unité de détection (26a, 26b, 26c ; 26d, 26e) fonctionne sans contact.

4. Installation selon l'une des revendications précédentes, **caractérisée en ce qu'**au moins une partie d'au moins une unité de détection (26a, 26b, 26c ; 26d, 26e) est disposée au-dessus du trajet de transport (24) dans l'espace et/ou au moins une partie d'au moins une unité de détection (26a, 26b, 26c ; 26d, 26e) est disposée en dessous du trajet de transport (24) dans l'espace et/ou au moins une partie d'au moins une unité de détection est disposée à côté du trajet de transport (24) dans l'espace.

5. Installation selon l'une des revendications précédentes, **caractérisée en ce que** le dispositif de mesure (16) comprend au moins un moyen pour déterminer une vitesse de transport (v) du panneau de matériau (12) dans le sens de transport (22).

6. Installation selon l'une des revendications précédentes, **caractérisée en ce qu'**il est prévu un dispositif de commande qui est en liaison active avec le dispositif de coupe (14) et le dispositif de mesure (16) de manière à réguler ou à commander le dispositif de coupe (14) à partir d'au moins une dimension déterminée avec le dispositif de mesure (16), en particulier de la longueur (L) et/ou de l'orientation déterminée et/ou de l'angulation déterminée de l'au moins un panneau de matériau (12).

7. Installation selon l'une des revendications précédentes, **caractérisée en ce que** l'installation (10) comprend en outre un dispositif d'étalement destiné à étaler un matériau sur un dispositif de transport et une presse fonctionnant en continu.

8. Procédé pour la conduite d'une installation pour la fabrication de panneaux de matériau comprenant au moins un dispositif de transport (18) pour le transport d'un lé de panneau sans fin (20) et des panneaux de matériau (12) à travers l'installation (10), avec au moins un dispositif de coupe (14) pour découper le lé de panneau sans fin (20) en panneaux de matériau (12) et un dispositif de mesure (16) pour mesurer des panneaux de matériau (12), dans lequel au moins un panneau de matériau (12) est guidé dans un sens de transport (22) sur un trajet de transport (24) à travers un dispositif de mesure (16),

l'au moins un panneau de matériau (12) est détecté dans au moins trois zones de détection (32a, 32b, 32c ; 32d, 32e) disposées à distance les unes des autres dans le trajet de transport (24) avec des unités de détection (26a, 26b, 26c ; 26d, 26e) correspondantes et au moins une dimension, en particulier une longueur (L) du panneau de matériau (12) détecté est déterminée à partir de signaux de détection des unités de détection (26a, 26b, 26c ; 26d, 26e) provenant de la détection de l'au moins un panneau de matériau (12), **caractérisé en ce que**, lorsque l'au moins un panneau de matériau (12) entre dans au moins une zone de détection (32a, 32b, 32c ; 32d, 32e), au moins un signal de détection est généré sous la forme d'un signal d'entrée (44a, 44b, 44c) et/ou, lorsque l'au moins un panneau de matériau (12) sort d'au moins un zone de détection (32a, 32b, 32c ; 32d, 32e), au moins un signal de détection est généré sous la forme d'un signal de sortie, (46a, 46b, 46c),
au moins deux zones de détection étant disposées l'une à côté de l'autre par rapport au sens de transport (22) ET au moins deux zones de détection étant disposées l'une à la suite de l'autre par rapport au sens de transport (22), et au moins un écart dans le temps (T(entrée, b-a), T (entrée, c-b), T (entrée, b-sortie, a)) entre au moins deux signaux de détection étant déterminé et une dimension, en particulier une longueur (L) et/ou une orientation et/ou une angulation, de l'au moins un panneau de matériau (12) étant déterminée à partir d'au moins un écart dans le temps (T(entrée, b-a), T (entrée, c-b), T (entrée, b-sortie, a)) entre au moins deux signaux de détection et d'au moins une autre grandeur prédéfinie, prédéfinis sable et/ou déterminable.

9. Procédé selon la revendication 8, **caractérisé en ce qu'**au moins un panneau de matériau (12) est détecté dans au moins deux zones de détection (32a, 32b, 32c) disposées l'une à la suite de l'autre dans le sens de transport (22), un écart dans le temps (T (entrée, b-sortie, a)) entre un signal de sortie (46a) à la sortie du panneau de matériau (12) d'une zone de détection (32a) située en amont dans le sens de transport (22) et un signal d'entrée (44b) à l'entrée du panneau de matériau (12) dans une zone de détection (32a) située en aval dans le sens de transport (22) est déterminé et la longueur (L) du panneau de matériau (12) dans le sens de transport (22) est déterminée à partir de l'écart dans le temps (T (entrée, b-sortie, a), de la vitesse de transport (v) du panneau de matériau (12) et de l'écart dans l'espace entre une zone de sortie (42) de la zone de détection (32a) d'amont et une zone d'entrée (40) de la zone de détection (32b) d'aval.

10. Procédé selon la revendication 8 ou 9, **caractérisée en ce qu'**au moins un panneau de matériau (12) est détecté dans au moins deux zones de détection (32d, 32e) situées l'une à côté de l'autre dans le sens de transport (22), un écart dans le temps entre leurs signaux d'entrée est déterminé et une orientation, en particulier un angle d'inclinaison (Y), du bord avant (36) du panneau de matériau (12) dans le sens de transport (22) par rapport au sens de transport (22) est déterminé à partir de l'écart dans le temps entre les signaux d'entrée, d'un écart dans l'espace (s3) entre les zones d'entrée (40) des zones de détection (32d, 32e) et de la vitesse de transport (v) et/ou

un écart dans le temps entre les signaux de sortie est déterminé et une orientation, en particulier un angle d'inclinaison (Y), du bord arrière (38) du panneau de matériau (12) dans le sens de transport (22) par rapport au sens de transport (22) est déterminé à partir de l'écart dans le temps entre les signaux de sortie, d'un écart dans l'espace (s3) entre les zones de sortie (40) des zones de détection (32d, 32e) et de la vitesse de transport (v).

11. Procédé selon l'une des revendications 8 à 10, **caractérisé en ce qu'**une vitesse de transport (v) du panneau de matériau (12) est déterminée à partir d'au moins un écart dans le temps (T(entrée, b-a), T (entrée, c-b)) entre au moins deux signaux de détection et au moins un écart dans l'espace (s1, s2) entre les zones de détection (32a, 32b, 32c) correspondantes desquelles proviennent les signaux de détection.

12. Procédé selon l'une des revendications 8 à 11, **caractérisé en ce que** l'au moins un panneau de matériau (12) est détecté dans au moins deux zones de détection (32a, 32b, 32c) disposées l'une à la suite de l'autre ou décalées l'une à la suite de l'autre dans le sens de transport (22) et **en ce qu'**une vitesse de transport (v) du panneau de matériau (12) est déterminée à partir d'un écart dans le temps (T(entrée, b-a), T (entrée, c-b)) entre les signaux d'entrée (44a, 44b, 44c) dans les zones de détection (32a, 32b, 32c) disposées l'une à la suite de l'autre ou décalées l'une à la suite de l'autre et d'un écart dans l'espace (s1, s2) des zones d'entrée (40) des zones de détection (32a, 32b, 32c) et/ou une vitesse de transport (v) du panneau de matériau (12) est déterminée à partir d'un écart dans le temps (T (sortie, b-a), T (sortie, c-b)) entre les signaux de sortie (46a, 46b, 46c) des zones de détection (32a, 32b, 32c) disposées l'une à la suite de l'autre ou décalées l'une à la suite de l'autre et d'un écart dans l'espace (s1, s2) des zones de sortie (42) des zones de détection (32a, 32b, 32c).

13. Procédé selon l'une des revendications 8 à 12, **caractérisé en ce que** l'autre grandeur prédéfinie, prédéfinis sable et/ou déterminable est la vitesse de transport (v) et/ou l'écart dans l'espace (s1, s2, s3) entre deux zones de détection (32a, 32b, 32c ; 32d, 32e).

Fig. 1

Fig. 2

EP 3 680 604 B1

Fig. 3

Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016001995 A1